# FASCICULE DE BREVET EUROPEEN

(11) **EP 2 587 974 B1**
(45) Date de publication et mention de la délivrance du brevet: **29.10.2014**
(21) Numéro de dépôt: 11737989.1
(22) Date de dépôt: 20.06.2011
(51) Int. Cl.: A47J 37/07

(54) **BARBECUE COMPACT**
KOMPAKTER GRILL
COMPACT BARBECUE

(30) Priorité: 01.07.2010 FR 1055273
(43) Date de publication de la demande: 08.05.2013
(73) Titulaire: Application des Gaz, 69230 Saint-Genis Laval (FR)
(72) Inventeur: ROCHEFORT, Denis, F-69290 Grezieu La Varenne (FR); BROUARD, Christophe, F-69290 Craponne (FR); CHAMPION, Marc, F-69006 Lyon (FR)
(74) Mandataire: Verriest, Philippe
(86) Numéro de dépôt international: PCT/FR2011/051402
(87) Numéro de publication internationale: WO 2012/001264

(56) Documents cités:
- US-A- 5 237 912
- US-A- 5 553 601
- US-A- 5 782 168
- US-A1- 2004 081 932

## Description

La présente invention concerne un barbecue compact pouvant être relié à une bouteille ou cartouche de gaz destiné à la cuisson d'aliments et comportant une chambre de combustion avec un brûleur à gaz radiant.

De façon connue en soi, le fait de disposer d'un brûleur radiant a solutionné le problème qui consistait à empêcher les graisses d'atteindre les éléments chauffants, ce qui générait des matières et fumées toxiques et entrainait la formation de flammes venant carboniser la nourriture et en altérait le goût.

Néanmoins, ce type de barbecue reste encombrant et difficilement transportable pour des personnes pratiquant du camping désireuses de profiter des avantages de la cuisson par un brûleur radiant.

Cet inconvénient incombe d'une part à l'ergonomie et principalement aux dimensions et au poids des barbecues mettant en oeuvre cette technologie et d'autre part aux graisses et fumées générées lors de la cuisson qui salissent les parties extérieures du barbecue, ces salissures pouvant tâcher les vêtements de l'utilisateur.

Par ailleurs, il est connu du document US 5 782 168 de disposer d'un barbecue pliable peu encombrant disposant d'une chambre à combustion comprenant une source de chaleur radiale en face de laquelle sont disposés des moyens de retenues de la nourriture maintenus sur des parois amovibles.

Cependant, ces moyens de maintiens ne peuvent pas aisément être dissociés des parois amovibles puis repositionnés sur celles-ci, ce qui rend leur manipulation difficile.

La présente invention a pour but de résoudre tout ou partie des inconvénients mentionnés ci-dessus.

A cet effet, la présente invention a pour objet, un barbecue compact pouvant être relié à une bouteille ou à une cartouche de gaz destiné à la cuisson d'aliments comportant une base, une chambre de combustion reliée à la base et comprenant une ouverture frontale, un brûleur à gaz radiant disposé à l'intérieur de la chambre à combustion en regard de l'ouverture frontale de celle-ci, le barbecue étant pliable, la base étant mobile par rapport à la chambre de combustion depuis une première position dite fonctionnelle dans laquelle la base est disposée sensiblement transversalement à la chambre de combustion et assure la stabilité au sol du barbecue, et l'ouverture frontale de la chambre de combustion est dégagée sur l'extérieur, jusqu'à une deuxième position dite de transport dans laquelle la base est disposée sensiblement longitudinalement à la chambre de combustion et obture l'ouverture de la chambre de combustion et la chambre de combustion comprenant des moyens de retenue situés à proximité de l'ouverture frontale et agencés pour retenir des moyens de maintien amovibles d'aliments à cuire en regard du brûleur à gaz radiant lorsque le barbecue est dans sa position fonctionnelle,
la chambre de combustion comprenant une partie amovible et la partie amovible comprenant un dispositif de blocage des moyens de maintien.

Cette disposition permet :
- de pouvoir facilement transporter le barbecue afin de s'en servir à un endroit quelconque. De plus, dans sa position de transport les parties extérieures restent relativement propres, ce qui permet le transport du barbecue en réduisant les risques de salissures des vêtements de l'utilisateur.
- le lavage aisé de cette partie du barbecue.
- de déplacer la partie amovible sans risquer de faire chuter les moyens de maintien et permet d'empêcher la sortie des brochettes de leurs moyens de retenue lors de leur rotation.

Selon un mode de réalisation, le dispositif de blocage des moyens de maintien comporte un organe allongé mobile depuis une première position interdisant la sortie des moyens de maintien de leur moyens de retenue jusqu'à une deuxième position autorisant la sortie des moyens de maintien de leur moyens de retenue.

Selon un mode de réalisation, le dispositif de blocage des moyens de maintien comprend un dispositif porté par les moyens de maintien comportant un épaulement mobile en translation depuis une première position dans laquelle l'épaulement interdit la sortie des moyens de maintien de leur moyens de retenue en coopérant avec des moyens d'arrêt jusqu'à une deuxième position dans laquelle l'épaulement est dégagé des moyens d'arrêts autorisant la sortie des moyens de maintien de leurs moyens de retenue.

Selon un mode de réalisation, les moyens d'arrêt comportent une butée disposée sur une paroi de la partie amovible.

Selon un mode de réalisation, les moyens d'arrêt comportent un trou circulaire de forme complémentaire à une portion circulaire de l'épaulement.

Avantageusement, les moyens de blocage se présentent sous forme d'un levier mobile en rotation par rapport à une paroi de la partie amovible, telle une barre plate.

Avantageusement, les moyens de blocage se présentent sous forme d'un organe mobile en translation par rapport à une paroi de la partie amovible, telle une barre plate.

Selon le même mode de réalisation la position de la partie amovible, une fois montée sur le barbecue, est choisie parmi une première position prédéterminée dite rapprochée dans laquelle la partie amovible est relativement proche du brûleur à gaz et au moins une deuxième position prédéterminée dite éloignée dans laquelle la partie amovible est relativement éloignée du brûleur à gaz par rapport à la position rapprochée.

Cette disposition permet de disposer d'un moyen supplémentaire de régulation de la température de cuisson des aliments en plus du moyen de régulation habituel consistant à réguler le débit de gaz alimentant le brûleur.

Elle permet également de prédéfinir la position de cuisson en fonction du type d'aliment à cuire.

Selon un mode de réalisation, les moyens de maintien amovibles sont des brochettes mobiles en rotation à l'intérieur des moyens de retenue et comportent chacune un moyen d'entraînement, tel un pignon, réalisant un engrenage avec la ou les brochette(s) adjacente(s) afin de se transmettre un mouvement de rotation.

Cette disposition permet d'entrainer en rotation l'ensemble des brochettes par la mise en rotation d'une seule brochette.

Selon le même mode de réalisation, le moyen d'entraînement des brochettes réalisant l'engrenage est maintenu à l'extérieur de l'ouverture frontale de la chambre de combustion.

Cette disposition permet de préserver les pignons des dépôts de graisses et de la majeure partie de la chaleur produite par le brûleur, cette chaleur pouvant entraîner des phénomènes de dilation des pignons pouvant résulter à un blocage du mouvement de rotation.

Selon un mode de réalisation, une des brochettes est entraînée par un moteur électrique.

Cette disposition permet d'obtenir une cuisson uniforme des aliments embrochés sans qu'il ne soit nécessaire de rester à proximité du barbecue par exemple pour actionner une manivelle.

Selon le même mode de réalisation, le moteur électrique entraîne la brochette comportant le moyen d'entraînement se trouvant le plus prêt du centre de l'engrenage.

Cette disposition permet de retirer les brochettes d'extrémités sans que les brochettes à proximité du centre ne cessent leur mouvement de rotation.

Selon un mode de réalisation, le moteur électrique est placé à l'extérieur de l'ouverture frontale de la chambre de combustion du côté opposé au côté sur lequel est placé le moyen d'entraînement de chacune des brochettes.

Selon un mode de réalisation, les moyens de maintien amovibles sont constitués par une double grille pouvant être utilisée pour la cuisson d'aliments tels que la viande, le poisson ou le pain.

Selon un mode de réalisation, le barbecue comporte une surface profilée au contour de la cartouche de gaz située sur la face arrière de sa chambre de combustion située dans la direction opposée à son ouverture frontale.

Cette disposition permet de réduire le refroidissement de la cartouche de gaz lors de la libération du gaz qu'elle contient dans le détendeur ou bien lors de faibles températures extérieures en chauffant davantage par rayonnement, par conduction mais aussi par convection la cartouche de gaz par l'intermédiaire du brûleur radiant se trouvant à proximité

Selon un mode de réalisation, la chambre de combustion comporte sur sa face arrière, située dans la direction opposée à son ouverture frontale, un compartiment de stockage d'un détendeur à gaz destiné à entreposer le détendeur à gaz lorsque celui-ci n'est pas connecté à la bouteille ou à la cartouche de gaz.

Cette disposition permet d'améliorer l'ergonomie du barbecue durant son transport.

Selon un mode de réalisation, le barbecue comporte des moyens d'accrochage agencés pour retenir un détendeur à gaz sur la face arrière de la chambre de combustion, située dans la direction opposée à son ouverture frontale.

Cette disposition permet de solidariser la bouteille ou la cartouche de gaz au barbecue et permet de réchauffer le gaz froid jaillissant sous pression dans le détendeur.

Selon un mode de réalisation, le barbecue comporte un moyen de verrouillage permettant de maintenir le barbecue dans sa position fonctionnelle.

Cette disposition permet d'empêcher un repliement intempestif du barbecue 1 vers sa position de transport.

Selon un mode de réalisation, le barbecue comporte un moyen de verrouillage permettant de maintenir le barbecue dans sa position de transport.

Cette disposition permet un transport du barbecue en toute sécurité en empêchant un déploiement intempestif du barbecue vers sa position fonctionnelle.

Selon un mode de réalisation, la base comporte une zone de préparation et/ou de stockage lorsque le barbecue est dans sa position fonctionnelle.

Cette disposition offre à l'utilisateur une solution pratique qui lui évite de chercher une autre zone de préparation et/ou de stockage à proximité du barbecue.

Selon un mode de réalisation, la chambre de combustion comporte sur sa face arrière, située dans la direction opposée à son ouverture frontale, une poignée de transport permettant de déplacer le barbecue dans sa position de transport mais également dans sa position fonctionnelle.

Cette disposition permet de déplacer facilement le barbecue en minimisant les risques de brûlure et de basculement du barbecue.

Selon un mode de réalisation, le barbecue comporte un bac de récupération de graisses amovible disposé sensiblement transversalement dans le fond de l'ouverture frontale de la chambre de combustion lorsque le barbecue se trouve dans sa position fonctionnelle mais également dans sa position de transport.

Cette disposition permet un lavage aisé de cet élément du barbecue.

De toute façon, l'invention sera bien comprise à l'aide de la description qui suit, en référence au dessin schématique annexé représentant, à titre d'exemple non limitatif, un barbecue compact selon l'invention.
La figure 1 montre une vue en perspective sur la face avant du barbecue dans sa position fonctionnelle.
La figure 2 montre une vue en perspective sur la face avant du barbecue de la figure 1 dans sa position de transport.
La figure 3 montre une vue sur la face arrière du barbecue dans sa position fonctionnelle.
La figure 4 montre une vue de côté du barbecue dans sa position fonctionnelle pour une première application.
La figure 5 montre une vue de face du barbecue de la figure 4.
La figure 6 montre une vue en perspective sur la face avant du barbecue dans sa position fonctionnelle pour une deuxième application.
La figure 7 montre une vue sur la face avant du barbecue de la figure 1 dans sa position de transport.
La figure 8 montre une vue détaillée sur un premier mode de réalisation d'une partie du barbecue.
La figure 9 montre une vue détaillée sur un deuxième mode de réalisation de la même partie du barbecue illustrée à la figure 8.
La figure 10 montre une vue détaillée sur un troisième mode de réalisation de la même partie du barbecue illustrée à la figure 8.
La figure 11 montre une autre vue du troisième mode de réalisation illustré à la figure 10.
La figure 12 montre une vue détaillée sur un quatrième mode de réalisation de la même partie du barbecue illustrée à la figure 8 en position de blocage.
La figure 13 montre une vue détaillée sur le quatrième mode de réalisation de la même partie du barbecue illustrée à la figure 8 en position de déblocage.
La figure 14 montre une autre vue du quatrième mode de réalisation illustré aux figures 12 et 13.

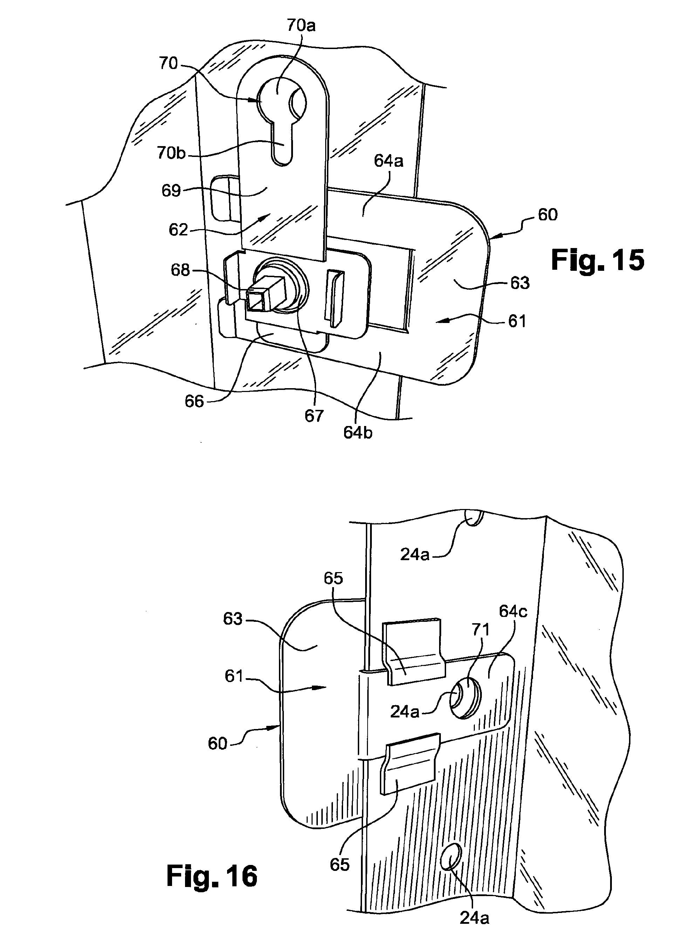

La figure 15 montre une vue détaillée sur une autre partie du barbecue.
La figure 16 montre une autre vue détaillée sur la partie du barbecue illustrée à la figure 15.

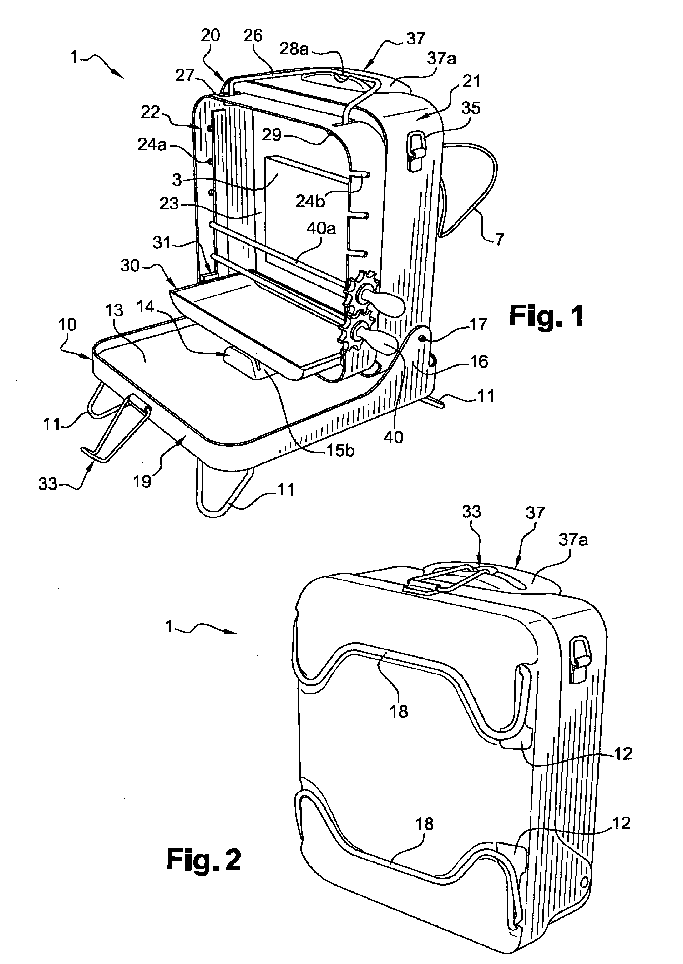

Comme illustré aux figures 1 et 2, un barbecue 1 selon l'invention comprend une base 10 reliée à une chambre de combustion 20 comprenant une ouverture frontale 23.

Dans la suite de la description, les références à une orientation spatiale sont prises en relation à l'ouverture frontale 23 de la chambre de combustion 20.

La base 10 a une forme sensiblement rectangulaire avec un bord circonférentiel 19 sensiblement transversal au plan principal de la base 10.

La base 10 comprend quatre pieds 11 assurant la stabilité au sol du barbecue 1. Ces quatre pieds 11 sont formés par deux barres rondes cintrés 18, de préférence en aluminium, mobiles chacune en rotation autour d'un axe passant par les flancs latéraux du bord circonférentiel 19 de la base 10 depuis une position dépliée illustrée à la figure 1 dans laquelle les pieds assurent la stabilité au sol du barbecue 1, jusqu'à une position repliée illustrée à la figure 2 dans laquelle les deux barres rondes cintrés 18 sont chacune maintenues dans des emplacements 12 ménagés dans l'épaisseur de la base 10 et de formes complémentaires au cintrage des barres rondes cintrés 18.

La base 10 est reliée à la chambre de combustion 20 par l'intermédiaire d'un axe 17 situé à l'extrémité de deux portions 16 en saillie du bord circonférentiel 19 de la base 10 et situé à proximité du fond et de l'arrière de la chambre de combustion 20.

Ainsi cet axe 17 permet le mouvement de rotation de la base 10 par rapport à la chambre de combustion 20 depuis une première position P1 dite fonctionnelle illustrée à la figure 1 jusqu'à une deuxième position P2 dite de transport illustrée à la figure 2.

La chambre de combustion 20 comprend deux parties gigognes, une partie principale 21 reliée par l'axe 17 à la base 10 et une partie amovible 22 dont la dimension permet son insertion dans la partie principale 21.

Un brûleur à gaz radiant 3 est disposé sur la paroi arrière de la partie principale 21 de la chambre de combustion 20 en regard de l'ouverture frontale 23.

Dans la position fonctionnelle P1 du barbecue 1, la partie amovible 22 est maintenue à l'encontre de la partie principale 21 d'une part sur sa zone inférieure par une lame 25, disposée sensiblement transversalement à partir de l'extérieur du contour inférieur de la partie amovible 22, venant s'insérer dans une séries de rainures 15a, 15b de position prédéterminée disposées sur un bloc support 14 fixé à proximité du centre de la base 10, et d'autre part sur sa zone supérieure par une barre ronde cintrée 26 amovible maintenue par clipsage dans une rainure parmi deux rainures 28a, 28b ménagées sur une première portion 37a d'un bloc multifonction 37 disposée sur le bord extérieur du contour supérieur de la partie principale 21 de la chambre de combustion 20.

Le bloc multifonction 37 avec l'ensemble de ces fonctions est décrit plus en détail un peu plus loin dans le texte.

Les deux extrémités de la barre ronde cintrée 26 traversent chacune une fente 27 ménagée sur le bord extérieur du contour supérieur de la partie amovible 22 de la chambre de combustion 20 et forment une liaison pivot en s'insérant partiellement dans un orifice ménagé sur une portion 29 faisant saillie du bord intérieur du contour supérieur de la partie amovible 22 de la chambre de combustion 20.

Ces deux liaisons pivots autorisent une rotation de la barre ronde cintrée 26et donc un débattement en hauteur de la parti médiane de la barre ronde cintrée 26 afin de positionner la partie amovible selon l'une ou l'autre des positions prédéterminées définies d'une part par la position des rainures 15a et 15b disposées sur le bloc support 14 fixé à proximité du centre de la base 10 et d'autre part par les rainures 28a et 28b ménagées sur la première portion 37a du bloc multifonction 37.

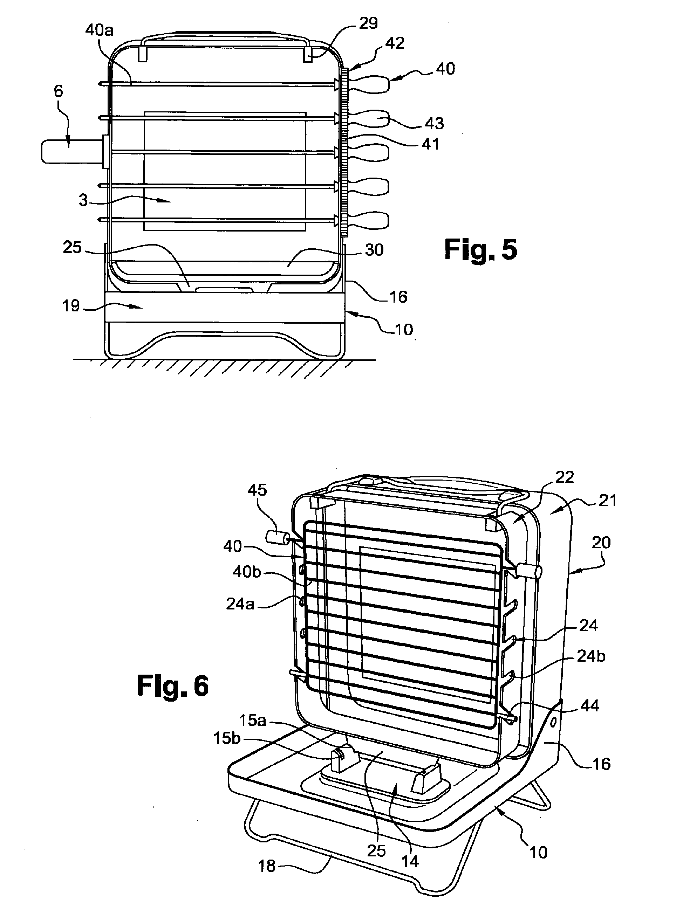

La partie amovible 22 de la chambre de combustion 20 comprend sur ses parois latérales des moyens de retenues 24 pour des moyens de maintien d'aliments 40 tels que des brochettes 40a comme cela est illustré à la figure 5 ou une grille 40b comme cela est illustré à la figure 6.

Dans la suite de la description, il sera considéré que les brochettes 40a ont un profil carré, néanmoins celles-ci peuvent avoir un autre profil tel que triangulaire afin d'améliorer l'entraînement en rotation des aliments sur la brochette 40a.

De plus, il est tout à fait envisageable d'entraîner mécaniquement en rotation des brochettes 40a ayant un profil triangulaire à l'aide de moyens d'entraînement ayant un profil carré, en mettant au contact deux des angles du profil triangulaire avec deux angles adjacents du profil carré et le troisième angle du profil triangulaire avec le milieu du côté opposé aux deux côtés du profil carré précédemment mentionnés.

A cet effet, ces moyens de retenues 24 sont constitués sur une première des deux parois latérales de la partie amovible 22 par des trous 24a pour le passage de l'extrémité des brochettes 40a ou des fentes 24b pour le passage de pattes de maintien 44 de la grille 40b et sur la deuxième des deux parois par des fentes 24b pour le passage du corps des brochettes 40a ou des pattes de maintien 44 de la grille 40b.

Pour un confort d'utilisation, certaines pattes de maintien 44 de la grille 40b présentent un fourreau de protection 45 pour éviter les brûlures.

Les moyens de retenues 24 comprennent également un dispositif de blocage 50 des brochettes dans leur fentes 24b.

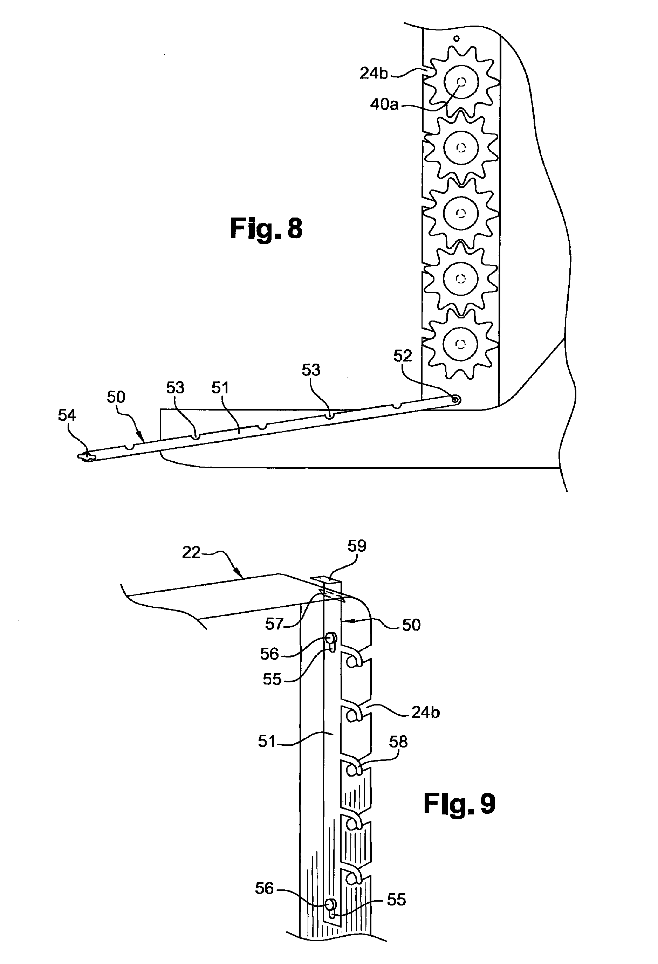

Selon un premier mode de réalisation illustré à la figure 8, ce dispositif de blocage 50 comprend une barre plate 51 de longueur supérieure à la distance séparant la fente 24b se trouvant le plus bas, de la fente 24b se trouvant le plus haut sur la deuxième des deux parois latérales de la partie amovible 22.

Cette barre plate 51 est reliée par une liaison pivot 52 située en dessous de la fente 24b se trouvant le plus bas sur la paroi latérale de la partie amovible 22 et légèrement en avant du plan sur lequel sont alignées les brochettes 40a lorsqu'elles sont placées dans leurs trous 24a et fentes 24b respectifs.

Le dispositif de blocage 50 comprend également une série d'encoches 53 disposées sur un flanc de la barre plate 51.

Ces encoches 53 coïncident avec les fentes 24b lorsque la barre plate 51 est amenée vers sa position verticale à l'aide de la liaison pivot 52.

La barre plate 51 est maintenue dans cette position à l'aide d'une fixation 54 réalisée par une vis papillon amovible ou autre dispositif de verrouillage type levier ou boulon.

Dans cette position, les brochettes 40a sont maintenues dans leur fente 24b respective à l'aide de la barre plate 51 située néanmoins à une distance suffisante du fond des fentes 24b pour ne pas empêcher la rotation des brochettes 40a.

Selon un deuxième mode de réalisation illustré à la figure 9, ce dispositif de blocage 50 comprend également une barre plate 51 de longueur supérieure à la distance séparant la fente 24b se trouvant le plus bas, de la fente 24b se trouvant le plus haut sur la deuxième des deux parois latérales de la partie amovible 22.

Cette barre plate 51 est montée coulissante en translation depuis une position basse jusqu'à une position haute.

Elle est située légèrement en arrière des fentes 24b et à l'intérieur de la paroi latérale de la partie amovible 22 sur laquelle sont ménagées ces mêmes fentes 24b.

Le mouvement de translation de cette barre plate 51 est réalisé par l'agencement aux deux extrémités de la barre plate 51 de deux trous oblongs 55 orientés verticalement dans lesquels coulissent un axe 56 fixé selon une position prédéterminée à la paroi latérale intérieure de la partie amovible 22.

L'extrémité de ces deux axes 56 est aplatie de manière à leur donner une largeur supérieure à la largeur des trous oblongs 55 empêchant ainsi la barre plate 51 de sortir de l'un des axes 56.

L'amplitude du mouvement de translation de la barre plate 51 est définie par la longueur des trous oblongs 55 servant de butée pour les deux axes 56.

De part son propre poids, la barre plate 51 se trouve par défaut en position basse.

Pour réaliser le mouvement de translation, l'extrémité haute de la barre plate 51 traverse la paroi de la partie amovible 22 par une ouverture 57 ménagée dans le prolongement de la barre plate 51.

Afin de facilité sa préhension, la barre plate 51 comprend sur sa portion en saillie de la partie amovible, un moyen de préhension 59 réalisé par exemple par l'extrémité recourbée de la barre plate 51.

Le dispositif de blocage 50 comprend également une série de crochets 58 orientées vers le bas et en saillie du flanc de la barre plate 51 venant coïncider avec les fentes 24b lorsque la barre plate 51 est dans sa position basse et libérant les fentes 24b lorsque la barre plate est dans sa position haute.

Dans la position basse, les brochettes 40a sont maintenues dans leur fente 24b respective à l'aide des crochets 58 de la barre plate 51 située néanmoins à une distance suffisante du fond des fentes 24b pour ne pas empêcher la rotation des brochettes 40a.

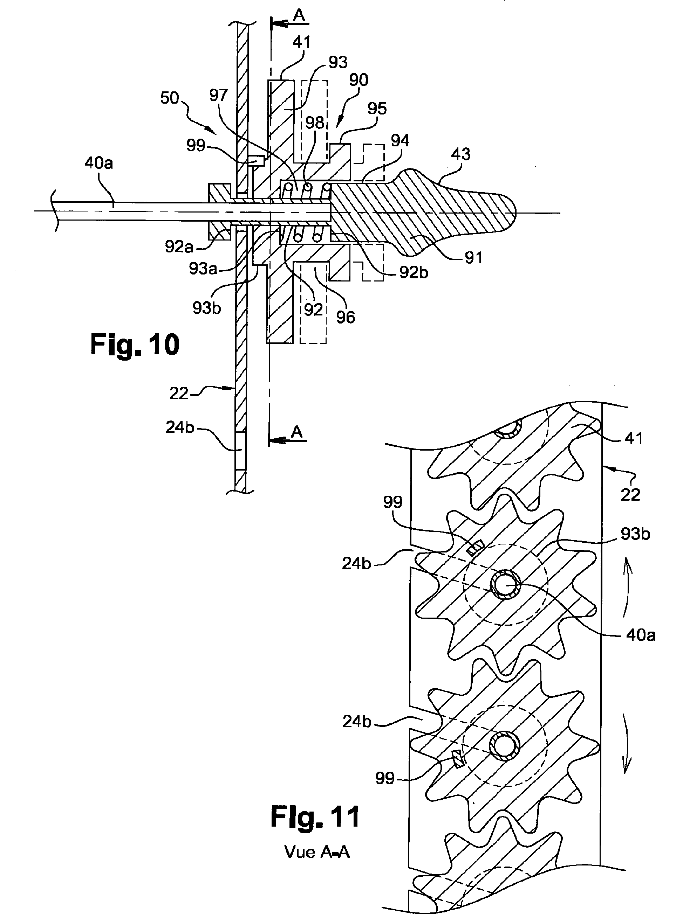

Selon un troisième mode de réalisation illustré aux figures 10 et 11, ce dispositif de blocage 50 utilise des brochettes 40a spécifiques dotés d'un dispositif 90 à pignon 41 rétractable.

Pour réaliser ce dispositif 90, la poignée 43 de la brochette 40a comprend un corps 91 dans lequel est ménagée une gorge annulaire 92 s'insérant dans la fente 24b dans laquelle est insérée la brochette 40a.

Cette gorge annulaire 92 comprend un épaulement annulaire intérieur 92a se trouvant du côté intérieur de la partie amovible 22 de la chambre de combustion 20 et un épaulement annulaire 92b se trouvant du côté extérieur de la partie amovible 22 de la chambre de combustion 20.

Sur le côté de cette gorge annulaire 92 se trouvant placé à l'extérieur de la partie amovible 22 de la chambre de combustion 20, le corps 93 du pignon 41 est monté coulissant en prenant appui d'une part à l'intérieur de la gorge annulaire 92 ménagé dans le corps 91 de la poignée 43 par l'intermédiaire d'un épaulement 93a, et d'autre part sur une portion de guidage 94 du corps 91 de la poignée 43.

L'épaulement 93a a sensiblement la même hauteur que la profondeur de la gorge annulaire 92.

Ainsi, la disposition du corps 93 du pignon 41 sur le corps 91 de la poignée 43 fait apparaître une chambre cylindrique 97.

Cette chambre cylindrique 97 comprend un ressort hélicoïdal 98 en compression prenant appui d'une part sur le côté de l'épaulement 93a du corps 93 du pignon 41 et d'autre part sur l'épaulement extérieur 92b de la gorge annulaire 92 ménagé dans le corps 91 de la poignée 43.

La longueur du ressort 98 est déterminée de manière à conserver un jeu permanent entre la paroi de la partie amovible 22 de la chambre de combustion 20 se trouvant à proximité de la fente 24b dans laquelle est insérée la brochette 40a et d'une part l'épaulement intérieur 92a du corps 91 de la poignée 43 et d'autre part un épaulement annulaire 93b du corps 93 du pignon 41 se trouvant entre la paroi de la partie amovible 22 et le pignon 41.

Cet épaulement annulaire 93b possède un diamètre supérieur à la largeur de la fente 24b et de préférence inférieur au diamètre du pignon 41.

Le corps 93 du pignon 41 sur son extrémité la plus éloignée de la paroi de la partie amovible 22 de la chambre de combustion 20 comprend également un autre épaulement annulaire 95 destiné à ménager un espacement annulaire 96 autour du corps 93 du pignon 41 pour le passage des doigts de l'utilisateur.

Enfin, le dispositif de blocage 50 comprend une butée 99 en saillie de la surface extérieure de la paroi de la partie amovible 22 de la chambre de combustion 20.

Cette butée 99 est placée à proximité de la fente 24b à une distance de l'axe de rotation de la brochette 40a légèrement supérieure au diamètre de l'épaulement 93b du corps 93 du pignon 41.

La hauteur de cette butée 99 est supérieure au jeu total créé entre l'épaulement annulaire intérieur 92a et l'épaulement annulaire 93b du corps 93 du pignon 41 lorsque le ressort hélicoïdal 98 en compression est en position de repos.

De plus, cette butée 99 est placée du côté de la fente 24b rencontrant en premier une portion déterminée du pignon 41.

Ainsi, pour une rotation du pignon 41 dans le sens trigonométrique, la butée est placée du côté supérieur de la fente 24b. Elle est placée du côté inférieur lorsque le pignon 41 évolue dans le sens anti-trigonométrique.Pour insérer la brochette 40a dans sa fente 24b avec un dispositif 90 selon ce troisième mode de réalisation, l'utilisateur prend appui avec sa main sur la poignée 43 de la brochette 40a et insère ses doigts dans l'espacement 96 en prenant appui sur l'épaulement 95 du corps 93 du pignon 41.

L'utilisateur tire alors vers lui le corps 93 du pignon 41, ce qui a pour effet de comprimer le ressort 98 et d'écarter l'épaulement annulaire intérieur 92a de l'épaulement annulaire 93b du corps 93 du pignon 41 permettant ainsi d'amener la brochette 40a jusqu'au fond de la fente 24b.

L'utilisateur relâche ensuite le corps 93 du pignon 41.

Afin de réaliser l'engrenage 42, l'utilisateur répète ces opérations pour chacune des brochettes 40a en veillant à engager correctement le pignon 41 de l'une dans le pignon 41 de l'autre.

Lors de l'entraînement en rotation de l'une des brochettes 40a, celle-ci entraîne en rotation la ou les brochettes adjacentes 40a mais dans le sens inverse.

Les brochettes 40a, qui ont normalement tendance à sortir de leur fente respective 24b, sont alors maintenues dans celle-ci grâce à l'action de la butée 99 sur laquelle vient buter et glisser l'épaulement annulaire 93b du corps 93 du pignon 41.

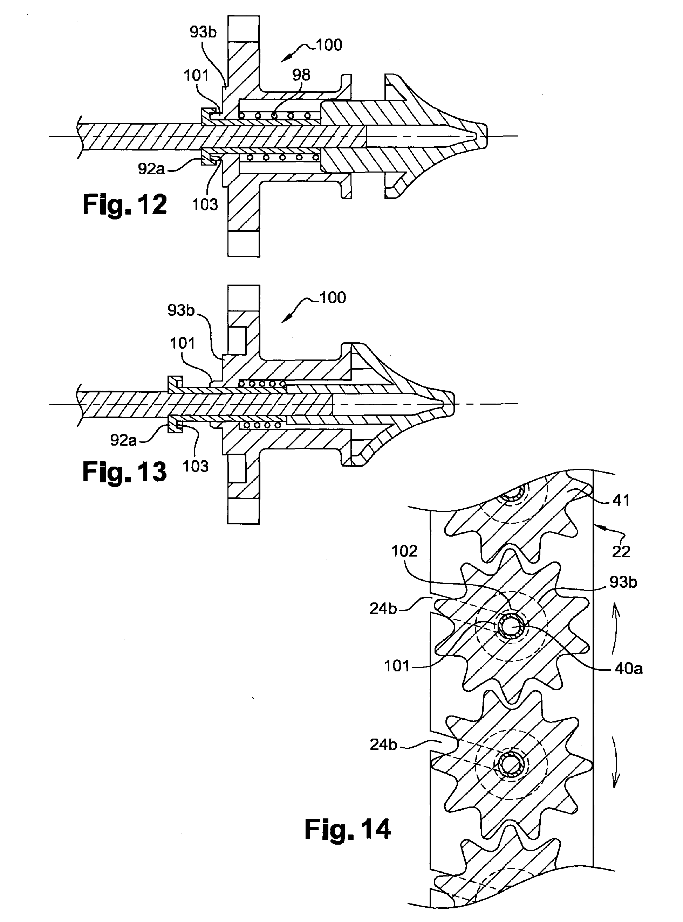

Selon un quatrième mode de réalisation, représenté aux figures 12 à 14 par un dispositif de blocage 100, le corps 93 du pignon comprend en plus du troisième mode de réalisation présenté ci-dessus, un épaulement annulaire 101 centré sur l'épaulement annulaire 93b.

Cet épaulement annulaire 101 a une largeur supérieure à l'épaisseur de la paroi de la partie amovible 22 de telle sorte qu'en position de blocage représenté à la figure 12, cet épaulement annulaire 101 vient en butée contre l'épaulement annulaire 92a sous l'action du ressort 98.

Dans cette position de blocage, et afin de centrer l'épaulement annulaire 101 sur l'épaulement annulaire intérieur 92a, ce dernier peut comporter une rainure annulaire 103 dans laquelle vient s'insérer l'extrémité de l'épaulement annulaire 101.

Pour permettre cet épaulement annulaire 101 de traverser la paroi de la partie amovible 22 afin de venir en butée contre l'épaulement intérieur 92a, les fentes 24b comprennent une terminaison en forme de trou circulaire 102 centré sur l'axe de rotation des brochettes 40a et de même diamètre au jeu près que le diamètre de l'épaulement annulaire 101.

Ce trou circulaire 102 remplace la butée 99 présenté dans le troisième mode de réalisation tout en réalisant la même fonction de butée.

La fonction de glissement de l'épaulement annulaire 93b lors de la rotation des brochettes 40a dans le troisième mode de réalisation est assurée par l'épaulement annulaire 101 qui vient buter et glisser contre les bords du trou circulaire 102 ménagé dans les fentes 24b dans ce quatrième mode de réalisation.

Dans ce quatrième mode de réalisation, le dimensionnement du ressort 98 a moins d'importance que dans le troisième mode de réalisation du fait que l'épaulement annulaire 101 vient en butée de l'épaulement annulaire 92a et du fait qu'un écart permanent est maintenu entre l'épaulement annulaire 93b et l'épaulement annulaire intérieur 92a défini par la largeur de l'épaulement annulaire 101.

Cet écart est supérieur à l'épaisseur de la paroi de la partie amovible et permet de conférer le jeu nécessaire au mouvement de rotation des brochettes 40a dans les fentes 24b.

Pour insérer la brochette 40a dans sa fente 24b avec un dispositif 100 selon ce quatrième mode de réalisation, l'utilisateur procède de la même façon que dans le troisième mode de réalisation.

L'utilisateur prend appui avec sa main sur la poignée 43 de la brochette 40a et insère ses doigts dans l'espacement 96 en prenant appui sur l'épaulement 95 du corps 93 du pignon 41.

L'utilisateur tire alors vers lui le corps 93 du pignon 41, ce qui a pour effet de comprimer le ressort 98 et d'écarter l'épaulement annulaire intérieur 92a des épaulements annulaires 101, 93b du corps 93 du pignon 41 permettant ainsi d'amener la brochette 40a jusqu'au fond de la fente 24b en alignement du trou circulaire 102.

L'utilisateur relâche ensuite le corps 93 du pignon 41 afin de faire pénétrer l'épaulement annulaire 101 au travers du trou circulaire 102 jusqu'en butée sur l'épaulement annulaire intérieur 92a.

Afin de réaliser l'engrenage 42, l'utilisateur répète ces opérations pour chacune des brochettes 40a en veillant à engager correctement le pignon 41 de l'une dans le pignon 41 de l'autre.

Lors de l'entraînement en rotation de l'une des brochettes 40a, celle-ci entraîne en rotation la ou les brochettes adjacentes 40a mais dans le sens inverse.

Les brochettes 40a, qui ont normalement tendance à sortir de leur fente respective 24b, sont alors maintenues dans celle-ci grâce à l'action du bord du trou circulaire 102 sur laquelle vient buter et glisser l'épaulement annulaire 101 du corps 93 du pignon 41.

En outre, le fait de pouvoir bloquer les brochettes 40a et même la double grille 40b pour certains dispositifs de blocage 50 permet à l'utilisateur de préparer à distance du barbecue 1, l'agencement des moyens de maintien 40 des aliments sur la partie amovible 22 disposée par exemple à l'horizontale sur une surface plane, puis permet à l'utilisateur de déplacer à la verticale la partie amovible 22 en la saisissant par sa barre ronde cintrée 26 sans risque de chute pour les moyens de maintien 40 des aliments.

Dans la première application du barbecue 1 consistant à utiliser des brochettes 40a, celles-ci comportent chacune sur une première de leurs deux extrémités, un moyen d'entraînement matérialisé par un pignon 41 disposé transversalement au corps de la brochette 40a ainsi qu'une poignée 43 prolongeant cette extrémité de la brochette 40a.

La deuxième extrémité de la brochette 40a est insérée dans un trou 24a ou au travers d'une fente 24b sur la première des deux parois latérales de la partie amovible 22 de manière à ce que le pignon 41 de la brochette 40a reste attenant à la surface extérieure de la deuxième des deux parois latérales de la partie amovible 22.

Le diamètre des pignons, la taille des dents des pignons et l'écartement entre deux moyens de retenue 24 adjacents est prédéterminé de manière à ce que la disposition de l'ensemble des brochettes forme un engrenage 42 permettant l'entraînement en rotation d'une brochette adjacente.

Dans les différents modes de réalisation présentés, tous les pignons 41 sont identiques, néanmoins il est tout à fait concevable de disposer de brochettes 40a ayant des dimensions de pignons différents afin d'obtenir des vitesses de rotation différentes permettant d'obtenir des cuissons différentes.

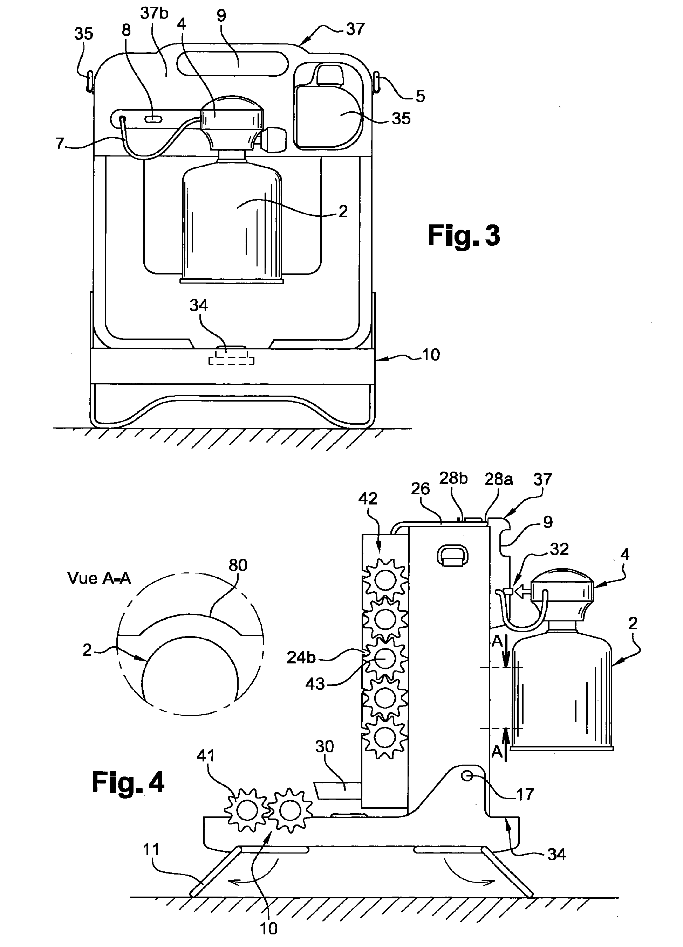

Ainsi, dans un barbecue 1 utilisant des brochettes 40a identiques, l'entraînement en rotation de la brochette 40a centrale dans un mode de réalisation comprenant par exemple cinq brochettes 40a, comme celui présenté aux figures 4 et 5, entraînera la rotation à la même vitesse des deux brochettes 40a adjacentes qui entraîneront à leur tour en rotation les deux brochettes 40a d'extrémité.

Cette rotation peut être effectuée manuellement à l'aide d'une manivelle amovible (non illustrée) ou bien à l'aide d'un moteur électrique 6 à piles amovible disponible dans le commerce, comme illustré à la figure 5, se fixant sur la surface extérieure de la première des deux parois latérales de la partie amovible 22 à l'aide d'un dispositif de support 60 amovible illustré aux figures 10 et 11 et détaillé ci-dessous.

Le moteur électrique 6 comporte de façon connue un axe d'entraînement désaxé de profil carré et un arrêt situé à une distance réglage dudit axe d'entraînement ayant pour fonction d'empêcher la rotation du moteur électrique 6 par rapport à la paroi latérale du barbecue 1.

Ce dispositif de support 60 comprend deux parties 61, 62 reliées l'une à l'autre.

La première partie 61 a pour fonction de positionner le dispositif de support 60 par rapport à la paroi latérale de la partie amovible 22.

La deuxième partie a pour fonction de positionner le moteur électrique 6 par rapport à la première partie 61.

La première partie 61 comprend une agrafe élastique 63 composée de trois pattes 64a, 64, b et 64c.

Les pattes 64a, 64, b et 64c sont engagées sur le flanc de la paroi latérale de la partie amovible 22.

Les pattes 64a et 64b se retrouvent alors du côté extérieur de la paroi latérale de la partie amovible 22 tandis que la patte 64c se retrouve du côté intérieur de cette même paroi latérale et est guidée à l'aide de deux rails 65 disposés de manière fixe de part et d'autre du trou 24a central des moyens de retenue de la brochette centrale 40a.

La patte 64c comprend un orifice 71 venant coïncider avec le trou 24a des moyens de retenue 24 de la brochette centrale 40a ménagé sur la paroi latérale de la partie amovible 22.

L'extrémité de chacune des pattes 64a, 64, b et 64c est légèrement courbée pour faciliter leur insertion sur le flanc de la paroi latérale de la partie amovible 22 et pour disposer de pattes 64a, 64, b et 64c ayant une forte raideur permettant un maintien solide du dispositif de support 60 sur la paroi latérale de la partie amovible 22.

La deuxième partie 62 comporte une base 66 en forme de « U » dont les extrémités des branches sont soudées aux agrafes 64a et 64b afin d'éloigner la base 66 de la paroi latérale de la partie amovible 22.

Sur cette base 66, il est disposé un moyeu creux 67 libre en rotation autour d'un axe correspondant à l'axe de la brochette central 40a une fois une fois celle-ci disposée à son emplacement sur ses moyens de retenue 24.

Ce moyeu creux 67 est maintenu à l'aide de deux circlips disposés de part et d'autre de la base 66 et s'insérant dans des gorges annulaires transverses ménagées dans le moyeu creux 67.

Le moyeu creux 67 présente en son centre un tube carré 68 creux faisant saillie transversalement dans la direction opposée à la chambre de combustion 20.

Ce tube carré 68 présente des dimensions légèrement supérieure au profil carrée de l'extrémité d'une brochette 40a et légèrement inférieure à l'axe d'entraînement désaxé de profil carré du moteur électrique 6.

Sur la base 66, il est également disposé une platine 69 s'étendant vers le haut parallèlement à la paroi latérale de la partie amovible 22 au-delà de la hauteur du trou 24a ménagé dans la paroi latérale de la partie amovible 22 pour le maintien de la brochette 40a immédiatement située au dessus de la brochette centrale 40a.

La platine 69 comprend un passage 70 en forme de trou de serrure avec une portion circulaire 70a de grand diamètre et une portion oblongue 70b de largeur inférieure au diamètre de la portion circulaire 70a.

La portion circulaire est alignée coaxialement avec le trou 24a ménagé dans la paroi latérale de la partie amovible 22 pour le maintien de la brochette 40a immédiatement située au dessus de la brochette centrale 40a.

La portion oblongue 70b est disposée en dessous de la portion circulaire 70a.

Pour utiliser la rotation motorisée des brochettes 40a, l'utilisateur commence par saisir le dispositif de support 60 du moteur électrique 6 sur lequel il insère l'axe d'entraînement désaxé de profil carré du moteur électrique 6 dans le tube carré 68 ainsi que son arrêt par la portion circulaire 70a.

Il fait ensuite coulisser l'arrêt dans la portion oblongue 70b puis il positionne le dispositif de support 60 du moteur électrique 6 sur la paroi latérale de la partie amovible 22.

Afin de prévenir un décalage longitudinal des brochettes 40a, celles-ci comportent une bague de section circulaire comportant deux flasques latérales entre lesquelles viennent s'insérer les encoches 53 ou bien les crochets 58 selon le mode de réalisation employé.

Comme illustré à la figure 4, dans sa position fonctionnelle P1, le barbecue 1 prévoit une zone de préparation et/ou de stockage 13 après cuisson de deux brochettes 40a supplémentaires.

En étant stockées à proximité du brûleur 3 ces deux brochettes 40a supplémentaires restent chaudes plus longtemps.

Dans le fond de la chambre de combustion 20, transversalement à la partie principale 21 et amovible 22, il est également prévu un bac amovible 30 de récupération des graisses maintenu par des rails 31 disposés sur la paroi intérieure de la partie amovible 22.

Ces rails 31 permettent un mouvement de translation horizontal du bac amovible 30 afin d'en autoriser le dégagement pour un éventuel lavage par exemple.

Comme illustré sur la figure 3, à l'arrière de la chambre de combustion 20, sont disposés les éléments d'allumage et d'alimentation du brûleur radiant 3.

Le bloc multifonction 37 est réalisé de façon monobloc en une seule pièce, de préférence en plastique dur moulé résistant aux fortes températures et comprend la première portion 37a disposée sur le bord extérieur du contour supérieur de la partie principale 21 de la chambre de combustion 20 ainsi qu'une deuxième portion 37b sensiblement disposée transversalement à la première portion 37a et recouvrant toute une partie supérieure de l'arrière de la partie principale 21 de la chambre de combustion 20.

Ce bloc multifonction 37 est maintenu de préférence par clipsage à l'encontre de la partie principale 21 de la chambre de combustion 20 réalisée de préférence en tôle, mais il est bien évident pour l'homme du métier que celui-ci peut être fixé à la partie principale 21 de la chambre de combustion 20 par tout autre moyen équivalent, par exemple des vis.

Un bouton d'allumage piézoélectrique 8 produisant une étincelle sur la surface extérieure de chauffe du brûleur radiant 3, fait saillie de la deuxième portion 37b du bloc multifonction 37.

La deuxième portion 37b du bloc multifonction 37 comprend également une poignée 9 moulé dans le bloc multifonction permettant à un utilisateur de déplacer le barbecue 1 qu'il soit en position de transport P2 ou en position fonctionnelle P1.

De même, la deuxième portion 37b du bloc multifonction 37 comprend un trou pour le passage d'un tuyau flexible 7 d'alimentation en gaz reliant le brûleur radiant 3 à un détendeur de gaz 4 ainsi qu'un compartiment 5 moulé avec le bloc multifonction 37 servant à entreposer le détendeur de gaz 4 lorsque celui-ci n'est pas relié à une bouteille ou à une cartouche de gaz 2.

Le détendeur de gaz 4 comporte un dispositif de raccordement réalisant la double fonction de détendeur et de robinet et se connectant facilement à une cartouche de gaz 2 de la manière décrite dans le brevet EP0981005 ou la demande de brevet EP1802908.

Lorsque le détendeur de gaz 4 est relié à une bouteille ou à une cartouche de gaz 2, il est prévu un moyen d'accrochage 32 du détendeur sur la deuxième portion 37b du bloc multifonction 37.

Ce moyen d'accrochage 32 peut par exemple être réalisé par une queue d'aronde ou bien par l'agencement d'un rail disposé sur la deuxième portion 37b du bloc multifonction 37 et d'une glissière de forme complémentaire à celle du rail disposée sur le détendeur de gaz 4 ou inversement.

Celui-ci peut également par exemple être réalisé par un ou deux orifices (non illustré) débouchant de forme du type trou de serrure formé sur la deuxième portion 37b du bloc multifonction 37 comprenant une partie haute circulaire de diamètre supérieur à celui d'une ou deux têtes de vis disposés sur le détendeur de gaz 4 et une partie basse oblongue de largeur inférieure à la ou les têtes de vis de manière à retenir le détendeur de gaz 4 lorsque la ou les têtes de vis de vis coulisse de la partie haute vers la partie basse de l'orifice.

Ces mêmes moyens d'accrochage 32 sont également présents dans le compartiment 5 afin d'y maintenir durant le transport le détendeur de gaz 4 lorsque celui-ci n'est pas connecté à une cartouche de gaz 2.

Une fois accrochée, la cartouche de gaz 2 vient au contact avec une surface profilée 80 située à l'arrière de la chambre de combustion 20 représentée à la figure 4 par la vue A-A sur l'arrière du barbecue 1.

Cette surface profilée 80 réduit le refroidissement de la cartouche de gaz 2 lors de la libération du gaz qu'elle contient dans le détendeur 4 ou bien lors de faibles températures extérieures en chauffant davantage par rayonnement, par conduction mais aussi par convection la cartouche de gaz 2 par l'intermédiaire du brûleur radiant 3 se trouvant à proximité.

Comme illustré notamment aux figures 3 et 4, sur la partie de la base 10 en saillie sur l'arrière de la partie principale 21 de la chambre de combustion 20 lorsque le barbecue 1 se trouve dans sa position fonctionnelle P1, il est disposé un moyen de verrouillage 34 bloquant le barbecue 1 dans sa position fonctionnelle P1, empêchant ainsi un repliement intempestif du barbecue 1 vers sa position de transport P2.

De façon connue en soi, ce moyen de verrouillage 34 peut par exemple comporter un bouton ressort relié à une lamelle prenant appui sur la partie principale 21 de la chambre de combustion 20 lorsque le barbecue se trouve dans sa position fonctionnelle P1.

De même, le barbecue 1 comprend également un moyen de verrouillage 33 bloquant le barbecue 1 dans sa position de transport P2, empêchant ainsi un déploiement intempestif du barbecue 1 vers sa position fonctionnelle P1.

Ce moyen de verrouillage 33, comme illustré aux figures 1 et 2, est ici formé par un crochet élastique relié au contour extérieur avant du bord 19 de la base 10 par une extrémité libre de rotation autour des points de fixation à la base 10, tandis que l'autre extrémité se clipse dans la rainure 28b ménagée sur la première portion 37a du bloc multifonction 37.

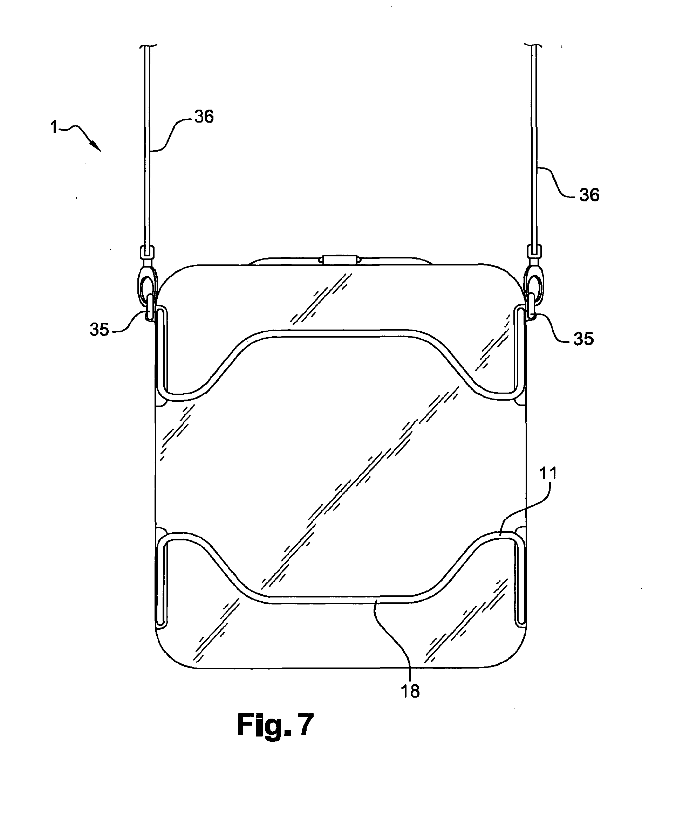

Pour le transport, comme illustré à la figure 7, il est également prévu des anneaux de transport 35 disposés sur la zone haute de l'extérieur des parois latérales de la partie principale 21 de la chambre de combustion 20, ainsi qu'une lanière 36 amovible venant de manière connue accrocher les deux anneaux de transport 35.

L'utilisateur du barbecue 1 peut ainsi transporter le barbecue 1 sur une de ces épaules.

Lorsque l'utilisateur veut se servir du barbecue 1, il commence par choisir un endroit propice à l'utilisateur du barbecue 1, de préférence un endroit dégagé situé à l'extérieur.

Il pose ensuite le barbecue 1 au sol et détache la lanière 36 des deux anneaux de transport 35.

Il déplie ensuite les quatre pieds 11 en déclipsant les deux barres rondes 18 de leurs emplacements 12 ménagés dans la base 10 puis l'utilisateur leur fait effectuer un mouvement de rotation jusqu'en butée contre la base 10.

L'utilisateur décroche alors le crochet élastique 33 et bascule la partie principale de la chambre de combustion 20 vers la position fonctionnelle P1 du barbecue 1 jusqu'à ce que le moyen de verrouillage 34 donne indication que le barbecue se trouve dans cette position fonctionnelle. Cette indication peut être visuelle ou tout simplement sonore.

A cette étape, la partie amovible 22 de la chambre de combustion 20 se trouve encastrée à l'intérieure de la partie principale 21 et les brochettes 40a sont rangées en diagonales de la partie amovible 22.

L'utilisateur commence donc par retirer la partie amovible 22, le bac de récupération des graisses 30, les brochettes 40a, qu'il peut par exemple disposer sur la zone de préparation et/ou stockage 13, ainsi qu'éventuellement le moteur électrique amovible 6 et son dispositif de support 60.

La barre ronde cintrée 26 de la partie amovible 22 est éventuellement retenue par une patte élastique (non illustrée) disposée à l'intérieure de la partie principale 21 de la chambre de combustion 20 pour éviter que la barre ronde cintrée 26 ne se déplace et n'engendre du bruit lors du transport du barbecue 1.

La partie amovible 22 est placée à plat sur une surface plane.

Après avoir préparé les brochettes 40a ou la double grille 40b en y accrochant des aliments, l'utilisateur dispose celles-ci sur les moyens de retenue 24 en insérant d'abord l'extrémité des brochettes 40a dans les trous 24a puis en ramenant le corps des brochettes 40a dans les fentes 24b en prenant soin d'aligner l'ensemble des pignons 41 des brochettes 40a afin de constituer l'engrenage 42.

L'utilisateur veille ensuite à fermer les fentes 24b à l'aide du dispositif de blocage 50.

Il installe éventuellement le moteur électrique 6 puis il installe la partie amovible 22 de la chambre de combustion 20 sur le barbecue 1.

La brochette centrale 40a de profil carré se retrouve ainsi insérée dans l'axe d'entraînement de profil carré du moteur électrique 6.

Afin de positionner la partie amovible 22 sur le barbecue 1, il saisit le bas de la partie amovible et place la lame 25 à l'intérieur d'une des séries de rainures 15a, 15b du bloc support 14 et accroche la barre ronde cintrée 26 sur la rainure appropriée parmi les rainures 28a, 28b ménagées sur une première portion 37a du bloc multifonction 37 afin de stabiliser la partie amovible 22 de la chambre de combustion 20.

L'utilisateur sort ensuite de son compartiment 5 le détendeur de gaz 4 auquel il raccorde une cartouche de gaz 2.

Il accroche ensuite le détendeur de gaz 2 à l'aide des moyens d'accrochage 32, ouvre le robinet situé sur le détendeur de gaz 2 puis appuie sur le bouton piézoélectrique pour allumer le brûleur radiant 3.

Il ne reste alors à l'utilisateur qu'à mettre en route le moteur électrique 6 à piles pour voir tourner l'ensemble des brochettes 40a.

La graisse des aliments est alors récupérée dans le bac de récupération 30 prévu à cet effet.

En fin de cuisson, l'utilisateur ferme l'alimentation en gaz à l'aide du robinet situé sur le détendeur de gaz 2 et arrête la rotation des brochettes 40a en arrêtant le moteur électrique 6.

Après avoir lavé l'ensemble des éléments amovibles tels que le bac de récupération des graisses 30, la partie amovible 32 de la chambre de combustion 30 et les brochettes 40a, l'utilisateur procède aux mêmes étapes dans l'ordre inverse pour amener le barbecue dans sa position de transport P2.

A noter que si elle n'est pas vide, la cartouche de gaz 2 peut rester accrochée au barbecue 1 sans que cela ne soit gênant à son transport.

Les dimensions de ce barbecue compact 1 font de ce barbecue 1 un dispositif facile à utiliser et à transporter avec un encombrement réduit.

A titre indicatif sur l'encombrement d'un barbecue 1 selon l'invention, en position fonctionnelle P1, la hauteur des pieds 11 positionne la base 10 à 5 cm du sol pour une hauteur totale inférieure à 45 cm, une profondeur inférieure à 43 cm et une largeur inférieure à 35 cm.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

## Revendications

1. Barbecue (1) compact pouvant être relié à une bouteille ou à une cartouche de gaz (2) destiné à la cuisson d'aliments comportant :
- une base (10),
- une chambre de combustion (20) reliée à la base (10) et comprenant une ouverture frontale (23),
- un brûleur à gaz radiant (3) disposé à l'intérieur de la chambre à combustion (20) en regard de l'ouverture frontale (23) de celle-ci,
le barbecue (1) étant pliable, la base (10) étant mobile par rapport à la chambre de combustion (20) depuis une première position (P1) dite fonctionnelle dans laquelle :
- la base (10) est disposée sensiblement transversalement à la chambre de combustion (20) et assure la stabilité au sol du barbecue (1), et
- l'ouverture frontale (23) de la chambre de combustion (20) est dégagée sur l'extérieur,
jusqu'à une deuxième position (P2) dite de transport dans laquelle :
- la base (10) est disposée sensiblement longitudinalement à la chambre de combustion (20) et obture l'ouverture (23) de la chambre de combustion (20), et
la chambre de combustion (20) comprenant des moyens de retenue (24) situés à proximité de l'ouverture frontale (23) et agencés pour retenir des moyens de maintien (40) amovibles d'aliments à cuire en regard du brûleur à gaz radiant (3) lorsque le barbecue (1) est dans sa position fonctionnelle (P1),
la chambre de combustion 20 comprenant une partie amovible (22) et la partie amovible comportant un dispositif de blocage (50) des moyens de maintien (40).

2. Barbecue (1) selon la revendication 1 dans lequel le dispositif de blocage (50) des moyens de maintien (40) comporte un organe allongé (51) mobile depuis une première position interdisant la sortie des moyens de maintien (40) de leur moyens de retenue (24) jusqu'à une deuxième position autorisant la sortie des moyens de maintien (40) de leur moyens de retenue (24).

3. Barbecue (1) selon la revendication 1 dans lequel le dispositif de blocage (50) des moyens de maintien (40) comprend un dispositif (90) porté par les moyens de maintien (40) comportant un épaulement (93a, 101) mobile en translation depuis une première position dans laquelle l'épaulement (93a, 101) interdit la sortie des moyens de maintien (40) de leur moyens de retenue (24) en coopérant avec des moyens d'arrêt (99, 102) jusqu'à une deuxième position dans laquelle l'épaulement (93a, 101) est dégagé des moyens d'arrêts (99, 102) autorisant la sortie des moyens de maintien (40) de leurs moyens de retenue (24).

4. Barbecue (1) selon la revendication 3 dans lequel les moyens d'arrêt comportent une butée (99) disposée sur une paroi de la partie amovible (22).

5. Barbecue (1) selon la revendication 3 dans lequel les moyens d'arrêt comportent un trou circulaire (102) de forme complémentaire à une portion circulaire de l'épaulement (101).

6. Barbecue (1) selon l'une des revendications 1 à 5 dans lequel la position de la partie amovible (22), une fois montée sur le barbecue (1), est choisie parmi une première position prédéterminée dite rapprochée dans laquelle la partie amovible (22) est relativement proche du brûleur à gaz (3) et au moins une deuxième position prédéterminée dite éloignée dans laquelle la partie amovible (22) est relativement éloignée du brûleur à gaz (3) par rapport à la position rapprochée.

7. Barbecue (1) selon l'une des revendications 1 à 6 dans lequel les moyens de maintien (40) amovibles sont des brochettes (40a) mobiles en rotation à l'intérieur des moyens de retenue (24) et comportent chacune un moyen d'entraînement (41), tel un pignon, réalisant un engrenage (42) avec la ou les brochette(s) (40a) adjacente(s) afin de se transmettre un mouvement de rotation.

8. Barbecue (1) selon l'une des revendications précédentes comprenant une surface profilée (80) au contour de la cartouche de gaz (2) située sur la face arrière de la chambre de combustion (20), située dans la direction opposée à son ouverture frontale (23).

9. Barbecue (1) selon l'une des revendications précédentes dans lequel la chambre de combustion (20) comporte sur sa face arrière, située dans la direction opposée à son ouverture frontale (23), un compartiment de stockage (5) d'un détendeur à gaz (4) destiné à entreposer le détendeur à gaz (4) lorsque celui-ci n'est pas connecté à la bouteille ou à la cartouche de gaz (2).

10. Barbecue (1) selon l'une des revendications précédentes comportant des moyens d'accrochage (32) agencés pour retenir un détendeur à gaz (4) sur la face arrière de la chambre de combustion (20), située dans la direction opposée à son ouverture frontale (23).

11. Barbecue (1) selon l'une des revendications précédentes comportant un moyen de verrouillage (34) permettant de maintenir le barbecue (1) dans sa position fonctionnelle (P1).

12. Barbecue (1) selon l'une des revendications précédentes dans lequel la base (10) comporte une zone de préparation (13) et/ou de stockage lorsque le barbecue (1) est dans sa position fonctionnelle (P1).

13. Barbecue (1) selon l'une des revendications précédentes dans lequel la chambre de combustion (20) comporte sur sa face arrière, située dans la direction opposée à son ouverture frontale (23), une poignée de transport (9) permettant de déplacer le barbecue (1) dans sa position de transport (P2) mais également dans sa position fonctionnelle (P1).

## Patentansprüche

1. Kompakter Grill (1), der mit einer Gasflasche oder einer Gaspatrone (2) verbunden werden kann, und zum Garen von Nahrungsmitteln bestimmt ist und folgendes umfasst:
- ein Basisgestell (10),
- eine Brennkammer (20), die mit dem Basisgestell (10) verbunden ist, und eine vordere Öffnung (23) umfasst,
- einen Gasstrahlungsbrenner (3), der im Inneren der Brennkammer (20), auf Höhe der vorderen Öffnung (23) derselben angeordnet ist,
wobei sich der Grill (1) zusammenklappen lässt, da das Basisgestell (10) im Verhältnis zur Brennkammer (20) ausgehend von einer ersten Stellung (P1), die Betriebsstellung genannt wird, in der:
- das Basisgestell (10) in etwa quer zur Brennkammer (20) angeordnet ist, und für die Stabilität des Grills (1) auf dem Boden sorgt, und
- die vordere Öffnung (23) der Brennkammer (20) nach außen offen ist, in eine zweite Stellung (P2) bewegt werden kann, die Transportstellung genannt wird, und in der:
- das Basisgestell (10) in etwa längs zur Brennkammer (20) angeordnet ist und die Öffnung (23) der Brennkammer (20) abdeckt, und
die Brennkammer (20) Haltemittel (24) umfasst, die sich nahe der vorderen Öffnung (23) befinden, und angeordnet sind, um die abnehmbaren Halteeinrichtungen (40) für die zu garenden Nahrungsmittel gegenüber dem Gasstrahlungsbrenner (3) zu halten, wenn sich der Grill (1) in seiner Betriebsstellung (P1) befindet,
wobei die Brennkammer (20) einen abnehmbaren Abschnitt (22) umfasst, und der abnehmbare Abschnitt eine Vorrichtung (50) zum Festhalten der Halteeinrichtungen (40) umfasst.

2. Grill (1) nach Anspruch 1, bei dem die Festhaltevorrichtung (50) für die Halteeinrichtungen (40) eine längliche Vorrichtung (51) umfasst, die aus einer ersten Stellung, in der das Herausnehmen der Halteeinrichtungen (40) aus ihren Haltemitteln (24) unterbunden wird, in eine zweite Stellung bewegt werden kann, in der das Herausnehmen der Halteeinrichtungen (40) aus ihren Haltemitteln (24) zulässig ist.

3. Grill (1) nach Anspruch 1, bei dem die Festhaltevorrichtung (50) der Halteeinrichtungen (40) eine Vorrichtung (90) umfasst, die von den Halteeinrichtungen (40) getragen wird, und einen Ansatz (93a, 101) umfasst, der aus einer ersten Stellung, in der der Ansatz (93a, 101) das Herausnehmen der Halteeinrichtungen (40) aus ihren Haltemitteln (24) unterbindet, indem er mit den Stoppvorrichtungen (99, 102) zusammenwirkt, in eine zweite Stellung verschoben werden kann, in der der Ansatz (93a, 101) von den Stoppvorrichtungen (99, 102) abgehoben ist, und das Herausnehmen der Halteeinrichtungen (40) aus ihren Haltemitteln (24) zulässt.

4. Grill (1) nach Anspruch 3, bei dem die Stoppvorrichtungen einen Anschlag (99) umfassen, der an einer Wand des abnehmbaren Abschnitts (22) angeordnet ist.

5. Grill (1) nach Anspruch 3, bei dem die Stoppvorrichtungen ein kreisrundes Loch (102) in einer Form umfassen, die ergänzend zu einem kreisrunden Abschnitt des Ansatzes (101) ist.

6. Grill (1) nach einem der Ansprüche 1 bis 5, bei dem die Stellung des abnehmbaren Abschnitts (22), sobald dieser auf dem Grill (1) montiert ist, aus einer ersten vorbestimmten Stellung, die angenäherte Stellung genannt wird, und in der der abnehmbare Abschnitt (22) relativ nahe am Gasbrenner (3) steht, und zumindest einer zweiten vorbestimmten Stellung, die entfernte Stellung genannt wird, und in der der abnehmbare Abschnitt (22) im Vergleich zur angenäherten Stellung relativ weit vom Gasbrenner (3) entfernt steht, ausgewählt wird.

7. Grill (1) nach einem der Ansprüche 1 bis 6, bei dem die abnehmbaren Halteeinrichtungen (40) Spieße (40a) sind, die innerhalb der Haltemittel (24) in Drehung versetzt werden können, und jeweils eine Antriebsvorrichtung (41), wie ein Ritzel, enthalten, die ein Räderwerk (42) mit dem (den) benachbarten Spieß(en) (40a) ergeben, um die Drehbewegung aufeinander zu übertragen.

8. Grill (1) nach einem der vorherigen Ansprüche, der eine profilierte Oberfläche (80) mit der Kontur der Gaspatrone (2) umfasst, die sich an der Rückseite der Brennkammer (20) befindet, die sich in der entgegengesetzten Richtung zu ihrer vorderen Öffnung (23) befindet.

9. Grill (1) nach einem der vorherigen Ansprüche, bei dem die Brennkammer (20) an ihrer Rückseite, die sich in der entgegengesetzten Richtung zu ihrer vorderen Öffnung (23) befindet, ein Ablagefach (5) für einen Gasdruckregler (4) umfasst, das dazu bestimmt ist, darin den Gasdruckregler (4) abzulegen, wenn dieser nicht an der Gasflasche oder der Gaspatrone (2) angeschlossen ist.

10. Grill (1) nach einem der vorherigen Ansprüche, der Befestigungsvorrichtungen (32) umfasst, die angeordnet sind, um einen Gasdruckregler (4) an der Rückseite der Brennkammer (20) zu halten, die sich in der entgegengesetzten Richtung zu ihrer vorderen Öffnung (23) befindet.

11. Grill (1) nach einem der vorherigen Ansprüche, der eine Verriegelungsvorrichtung (34) umfasst, anhand derer der Grill (1) in seiner Betriebsstellung (P1) gehalten werden kann.

12. Grill (1) nach einem der vorherigen Ansprüche, bei dem das Basisgestell (10) eine Zone zur Zubereitung (13) und/ oder zur Ablage umfasst, wenn sich der Grill (1) in seiner Betriebsstellung (P1) befindet.

13. Grill (1) nach einem der vorherigen Ansprüche, bei dem die Brennkammer (20) an ihrer Rückseite, die sich in der entgegengesetzten Richtung zu ihrer vorderen Öffnung (23) befindet, einen Transportgriff (9) umfasst, mit dem der Grill (1) in seiner Transportstellung (P2) aber auch in seiner Betriebsstellung (P1) bewegt werden kann.

## Claims

1. A compact barbecue (1) able to be connected to a bottle or to a cartridge of gas (2) intended for cooking food including:
- a base (10),
- a combustion chamber (20) connected to the base (10) and comprising a front opening (23),
- a radiant gas burner (3) disposed inside the combustion chamber (20) facing the front opening (23) of the latter,
the barbecue (1) being foldable, the base (1) being mobile with respect to the combustion chamber (20) from a first position (P1) called functional position in which:
- the base (10) is disposed substantially transversely to the combustion chamber (20) and ensures the stability of the barbecue (1) on the ground, and
- the front opening (23) of the combustion chamber (20) is cleared on the outside,
to a second position (P2) called transport position in which:
- the base (10) is disposed substantially longitudinally to the combustion chamber (20) and blocks the opening (23) of the combustion chamber (20), and
the combustion chamber (20) comprising retaining means (24) located in the vicinity of the front opening (23) and arranged to retain moveable means (40) for maintaining food to be cooked facing the radiant gas burner (3) when the barbecue (1) is in its functional position (P1),
the combustion chamber (20) comprising a moveable part (22) and the moveable part (22) including a device (50) for blocking maintaining means (40).

2. The barbecue (1) according to claim 1 in which the device (50) for blocking the maintaining means (40) includes a mobile elongated member (51) from a first position prohibiting the exit of the maintaining means (40) from their retaining means (24) to a second position allowing the exit of the maintaining means (40) from their retaining means (24).

3. The barbecue (1) according to claim 1 in which the device (50) for blocking the maintaining means (40) comprises a device (90) carried by the maintaining means (40) including a shoulder (93a, 101) mobile in translation from a first position in which the shoulder (93a, 101) prohibits the exit of the maintaining means (40) from their retaining means (24) by cooperating with stopping means (99, 102) to a second position in which the shoulder (93a, 101) is cleared from the stopping means (99, 102) allowing the exit of the maintaining means (40) from their retaining means (24).

4. The barbecue (1) according to claim 3 in which the stopping means include a stop (99) disposed on a wall of the moveable part (22).

5. The barbecue (1) according to claim 3 in which the stopping means include a circular hole (102) of a shape complementary to a circular portion of the shoulder (101).

6. The barbecue (1) according to any of claims 1 to 5 in which the position of the moveable part (22), once mounted on the barbecue (1), is selected from among a first predetermined position called closer position in which the moveable part (22) is relatively close to the gas burner (3) and at least a second predetermined position called remote position in which the moveable part (22) is relatively far from the gas burner (3) with respect to the closer position.

7. The barbecue (1) according to any of claims 1 to 6 in which the moveable maintaining means (40) are skewers (40a) mobile in rotation inside the retaining means (24) and include each a driving means (41), such as a pinion, achieving a meshing (42) with the adjacent skewer or skewers (40a) in order to transmit a movement of rotation.

8. The barbecue (1) according to any of the preceding claims comprising a profiled surface (80) at the outline of the gas cartridge (2) located on the rear face of the combustion chamber (20), located in the direction opposite to its front opening (23).

9. The barbecue (1) according to any of the preceding claims in which the combustion chamber (20) includes on its rear face, located in the direction opposite to its front opening (23), a compartment (5) for storing a gas pressure regulator (4) intended to store the gas pressure regulator (4) when the latter is not connected to the bottle or to the cartridge of gas (2).

10. The barbecue (1) according to any of the preceding claims including hanging means (32) arranged to retain a gas pressure regulator (4) on the rear face of the combustion chamber (20), located in the direction opposite to its front opening (23).

11. The barbecue (1) according to any of the preceding claims including a locking means (34) which allows maintaining the barbecue (1) in its functional position (P1).

12. The barbecue (1) according to any of the preceding claims in which the base (10) includes a preparation (13) and/or storage area when the barbecue (1) is in its functional position (P1).

13. The barbecue (1) according to any of the preceding claims in which the combustion chamber (20) includes on its rear face, located in the direction opposite to its front opening (23), a transport handle (9) which allows moving the barbecue (1) in its transport position (P2) but also in its functional position (P1).
